# EUROPÄISCHE PATENTSCHRIFT

(11) **EP 1 100 613 B1**
(45) Veröffentlichungstag und Bekanntmachung des Hinweises auf die Patenterteilung: **29.01.2003**
(21) Anmeldenummer: 99939250.9
(22) Anmeldetag: 07.04.1999
(51) Int. Cl.: B01D 53/94, B01D 53/96

(54) **VERFAHREN ZUR REGENERATION EINES NOx-SPEICHERKATALYSATORS**
METHOD FOR REGENERATING A NOx ACCUMULATION CATALYST
PROCEDE POUR REGENERER UN POT CATALYTIQUE A ACCUMULATION DE NOx

(30) Priorität: 26.05.1998 DE 19823512
(43) Veröffentlichungstag der Anmeldung: 23.05.2001
(73) Patentinhaber: SIEMENS AKTIENGESELLSCHAFT, 80333 München (DE)
(72) Erfinder: PFLEGER, Corinna, D-93093 Donaustauf (DE); ZHANG, Hong, D-93057 Regensburg (DE)
(86) Internationale Anmeldenummer: DE9901064
(87) Internationale Veröffentlichungsnummer: WO99061139

(56) Entgegenhaltungen:
- EP-A- 0 597 106
- DE-A- 19 536 571

## Beschreibung

Die Erfindung betrifft ein Verfahren zur Regeneration eines NOx-Speicherkatalysators gemäß dem Oberbegriff des Patentanspruchs 1.

Um den Kraftstoffverbrauch von Otto-Brennkraftmaschinen weiter zu reduzieren, kommen Brennkraftmaschinen mit magerer Verbrennung immer häufiger zum Einsatz. Bei Otto-Brennkraftmaschinen mit magerer Verbrennung wird der Luftüberschuß so groß gewählt, wie es die Lastanforderung an die Brennkraftmaschine gestattet. Hierbei können verschiedene Betriebsarten unterschieden werden, nämlich Schichtlade-Betrieb (Lambda ≥ 3), homogen-mager-Betrieb (1,3 < Lambda < 1,5), Lambda-1-geregelten-Betrieb (Lambda = 1) und homogenfett-Betrieb (Lambda < 1), wobei das von der Brennkraftmaschine abgebbare maximale Drehmoment betriebsartabhängig ist. Abhängig von der Lastanforderung wird die magerst-mögliche Betriebsart gewählt. Lambda-Werte, die zwischen den LambdaWerten dieser Betriebsarten liegen, sind aus Emissionsund/oder Komfortgründen unvorteilhaft.

Zur Erfüllung der geforderten Abgasemissionsgrenzwerte ist bei solchen vorwiegend mager betriebenen Brennkraftmaschinen eine spezielle Abgasnachbehandlung notwendig. Dazu werden NOx-Speicherkatalysatoren verwendet. Diese NOx-Speicherkatalysatoren sind aufgrund ihrer Beschichtung in der Lage, NOx-Verbindungen aus dem Abgas zu absorbieren, die bei magerer Verbrennung entstehen. Während einer Regenerationsphase werden die absorbierten bzw. gespeicherten NOx-Verbindungen unter Zugabe eines Reduktionsmittels überwiegend in unschädliche Verbindungen umgewandelt. Als Reduktionsmittel für mager betriebene Otto-Brennkraftmaschinen können CO, H₂ und HC (Kohlenwasserstoffe) verwendet werden. Diese werden durch kurzzeitiges Betreiben der Brennkraftmaschine mit einem fetten Gemisch erzeugt und dem NOx-Speicherkatalysator als Abgaskomponenten zur Verfügung gestellt, wodurch die gespeicherten NOx-Verbindungen im Katalysator abgebaut werden.

Aus der EP 0 597 106 A1 ist ein Verfahren zur Regenerierung eines NOx-Speicherkatalysators bekannt, bei dem die vom NOx-Speicherkatalysator absorbierte Menge an NOx in Abhängigkeit von Betriebskenngrößen der Brennkraftmaschine berechnet wird. Bei Überschreiten einer vorgegebenen Grenzmenge von im NOx-Speicherkatalysator gespeichertem NOx wird eine Regenerationsphase des NOx-Speicherkatalysators durchgeführt, indem die Brennkraftmaschine zur Regeneration des NOx-Speicherkatalysators kurzzeitig mit einem fetten Gemisch betrieben wird. Bei jeder Regeneration steigt deshalb der Kraftstoffverbrauch der Brennkraftmaschine kurzzeitig an.

Der Erfindung liegt die Aufgabe zugrunde, ein Verfahren zur Regeneration eines NOx-Speicherkatalysators anzugeben, mit dem der Kraftstoffmehrverbrauch reduziert ist, der durch die Regeneration des NOx-Speicherkatalysators verursacht wird.

Diese Aufgabe wird durch die Merkmale des Hauptanspruchs gelöst.

Erfindungsgemäß erfolgt die Regeneration des NOx-Speicherkatalysators in bestimmten Lastphasen der Brennkraftmaschine, wenn der Beladungsgrad des NOx-Speicherkatalysators einen einer Mindestbeladung entsprechenden Schwellenwert überschreitet. Die Brennkraftmaschine wird dann mit einem definiert fetten Gemisch betrieben, um dem NOx-Speicherkatalysator das erforderliche Reduktionsmittel zuzuführen. Auf diese Weise wird der NOx-Speicherkatalysator im dynamischen Betrieb regeneriert, eine eigens angeforderte Regenerationsphase wird somit bei dynamischem Betrieb seltener nötig bzw. vermieden. Durch den Schwellenwertvergleich wird erreicht, daß nicht in jeder Lastphase die Brennkraftmaschine mit fettem Gemisch betrieben wird, was zu einem unnötigen Kraftstoffmehrverbrauch führen würde.

Der Betrieb der Brennkraftmaschine mit angefettetem Gemisch zur Regeneration in den bestimmten Lastphasen wirkt sich darüber hinaus positiv auf das Betriebsverhalten der Brennkraftmaschine aus.

Für den Fall, daß die Beladung des NOx-Speicherkatalysators eine Maximalbeladung erreicht, wird unabhängig vom momentanen Betrieb der Brennkraftmaschine eine Regenerationsphase angefordert. Dies kann bei einem Betrieb mit geringen dynamischen Anteilen notwendig sein, in denen nicht genügende, zur Regeneration geeignete Lastphasen zur Verfügung stehen.

Die bestimmten Lastphasen können nach einer bevorzugten Ausführung des erfindungsgemäßen Verfahrens durch eine positive Momentenanforderung bestimmten Größe (ΔM/Δt > Schwelle) und/oder einen Beschleunigungswunsch definiert sein.

Vorteilhafte Ausgestaltungen der Erfindung sind in den Unteransprüchen gekennzeichnet.

Die Erfindung wird nachfolgend unter Bezugnahme auf die Zeichnung in einem Ausführungsbeispiel näher erläutert. Die Zeichnung zeigt:
- Fig. 1: ein Blockschaltbild einer Brennkraftmaschine mit einem NOx-Speicherkatalysator;
- Fig. 2: den zeitlichen Verlauf des Lambda-Wertes des der Brennkraftmaschine zugeführten Kraftstoff/Luft-Gemisches bei einer Regeneration des NOx-Speicherkatalysators während einer stationären Betriebsphase der Brennkraftmaschine,
- Fig. 3: den zeitlichen Verlauf des Lambda-Wertes des Kraftstoff/Luft-Gemisches bei einer Regeneration des NOx-Speicherkatalysators während einer dynamischen Betriebsphase der Brennkraftmaschine und
- Fig. 4: die von einer Brennkraftmaschine in den verschiedenen Betriebsarten abgebbaren Momente.

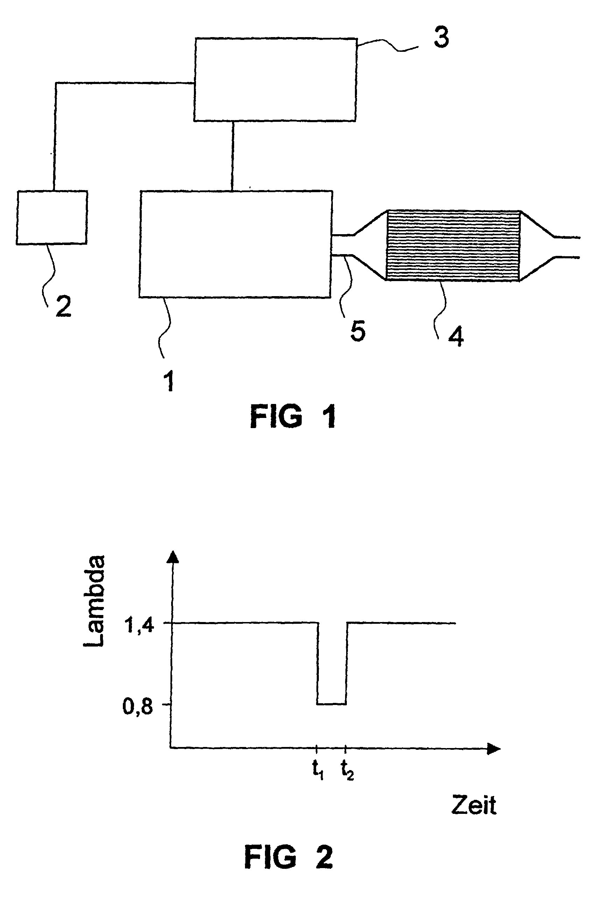

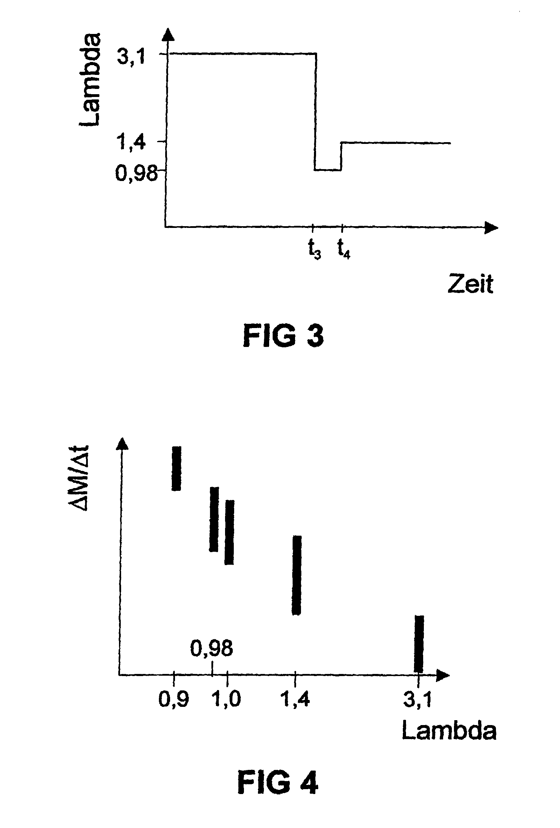

Die in Fig. 1 schematisch dargestellte Brennkraftmaschine 2 verfügt in ihrem Abgastrakt 5 über einen NOx-Speicherkatalysator 4, der während des Magerbetriebes der Brennkraftmaschine 2 NOx-Verbindungen aus dem Abgas absorbiert. Der Betrieb der Brennkraftmaschine 2 wird von einem Betriebssteuergerät 3 unter anderem abhängig von der Stellung eines Fahrpedales 1 gesteuert, wobei je nach Momentenanforderung die Betriebsart gewählt wird (vgl. Fig. 4).

Stellt das Betriebssteuergerät 3 eine Lastphase mit positiver Momentenanforderung (ΔM/Δt > Schwelle) fest bzw. wird am Fahrpedal 1 ein Beschleunigungswunsch eingegeben, so muß in der Regel die Brennkraftmaschine in einer anderen Betriebsart, d.h. mit fetterem Gemisch betrieben werden, wenn, wie in Fig. 4 zu sehen, die positive Momentenanforderung in der vorliegenden Betriebsart nicht erfüllt werden kann. Dies ist in Fig. 3 zum Zeitpunkt t₃ der Fall. Der Lambda-Wert des der Brennkraftmaschine 2 zugeführten Kraftstoff/Luft-Gemisches muß zum Betrieb der Brennkraftmaschine in der gewünschten Lastphase gesenkt werden, beispielsweise von Schichtlade-Betrieb mit Lambda > 3 auf homogen-mager mit z.B. Lambda = 1,4. Stellt das Betriebssteuergerät 3 der Brennkraftmaschine nun fest, daß der aktuell berechnete Beladungsgrad des NOx-Speicherkatalysators einen Schwellenwert übersteigt bzw. erreicht, wird während dieser Lastphase die Brennkraftmaschine mit einem homogen-fetten Gemisch betrieben. Das der Brennkraftmaschine 2 zugeführte Kraftstoff/Luft-Gemisch wird also auf einen Lambda-Wert unter 1 und somit fetter eingestellt, als es zum Abwickeln der aktuell vorliegenden Momentenanforderung eigentlich erforderlich wäre. Dies bewirkt eine Regenerationsphase des NOx-Speicherkatalysators. Ist diese zum Zeitpunkt t₄ abgeschlossen, wird die zusätzliche Anfettung des Kraftstoff/Luft-Gemisches zurückgenommen, und der Betrieb der Brennkraftmaschine erfolgt wieder in der magerstmöglichen Betriebsart, im Beispiel der Fig. 3 also mit einem Lambda-Wert von 1,4.

Die zusätzliche Anfettung zum Durchführen einer Regenerationsphase bei einer solchen Lastphase der Brennkraftmaschine wirkt sich darüber hinaus positiv auf das'Betriebsverhalten der Brennkraftmaschine aus. Außerdem entfallen durch die Regeneration des NOx-Speicherkatalysators im dynamischen Betrieb eigens angeforderte Regenerationsphasen, was Verbrauchsvorteile mit sich bringt.

Vor Einleiten dieser in der Lastphase durchgeführten Regenerationsphase wird vorteilhafterweise geprüft, ob die positive Momentenanforderung bzw. der Beschleunigungswunsch einen gewissen Mindestwert aufweist. Dadurch wird erreicht, daß die zusätzliche Anfettung des Gemisches, die zur Durchführung der Regenerationsphase erforderlich ist, so gering wie möglich ausfällt, und daß bei Lastphasen, die z. B. noch im Schichtlade-Betrieb, d.h. mit weitgehend magerem Gemisch abgewickelt werden können, keine Regeneration eingeleitet wird.

Bei Betrieb der Brennkraftmaschine mit geringen dynamischen Anteilen sind die in Lastphasen mit positiver Momentenanforderung eingeleiteten Regenerationsphasen möglicherweise nicht ausreichend, um den NOx-Speicherkatalysator bedarfsgerecht zu entleeren. Dies kann vom Betriebssteuergerät 3 dadurch festgestellt werden, daß der Beladungsgrad des NOx-Speicherkatalysators eine Maximalbeladung erreicht oder überschreitet. Ist dies der Fall, wird unabhängig vom momentanen Betrieb der Brennkraftmaschine eine Regenerationsphase angefordert, in der zur Regeneration des NOx-Speicherkatalysators 4 die Brennkraftmaschine 2 kurzzeitig mit einem fetten Gemisch betrieben wird. Ein hierfür beispielhafter zeitlicher Verlauf des Lambda-Wertes des der Brennkraftmaschine 2 zugeführten Kraftstoff/Luft-Gemisches ist in Fig. 2 zu sehen. Die Brennkraftmaschine 2 wird statisch homogen-mager mit Lambda = 1,4 betrieben. Zum Zeitpunkt t₁ stellt das Betriebssteuergerät 3 fest, daß die im NOx-Speicherkatalysator absorbierte Menge an NOx-Verbindungen eine Maximalbeladung erreicht oder überschreitet. Ab dem Zeitpunkt t₁ wird die Brennkraftmaschine 2 mit einem fetten Gemisch betrieben, der Lambda-Wert sinkt auf einen Wert unter 1, beispielsweise 0,8. Ist die Regeneration abgeschlossen, was üblicherweise nach 2-3 s der Fall ist, wird ab dem Zeitpunkt t₂ der homogen-magere Betrieb der Brennkraftmaschine 2 wieder fortgesetzt.

Natürlich kann im Rahmen der vorliegenden Erfindung bei der Ermittlung des Beladungsgrades des NOx-Speicherkatalysators, die üblicherweise modellbasiert abhängig von Betriebsparametern der Brennkraftmaschine erfolgt, auch eine die NOx-Konzentration messende NOx-Sonde stromab des NOx-Speicherkatalysators 4 eingesetzt werden.

## Patentansprüche

1. Verfahren zur Regeneration eines NOx-Speicherkatalysators, der im Abgastrakt einer mit Luftüberschuß arbeitenden Brennkraftmaschine angeordnet ist, bei dem im NOx-Speicherkatalysator gespeichertes NOx bei Erreichen einer vorbestimmten Beladung des NOx-Speicherkatalysators in einer Regenerationsphase durch ein Reduktionsmittel im Abgas katalytisch umgewandelt wird, wobei das Reduktionsmittel durch kurzzeitigen Betrieb der Brennkraftmaschine mit einem fetten Kraftstoff/Luft-Gemisch (Lambda < 1) erzeugt wird,
**dadurch gekennzeichnet, daß** in bestimmten Lastphasen der Brennkraftmaschine der Beladungsgrad des NOx-Speicherkatalysators mit einem einer gewissen Mindestbeladung des NOx-Speicherkatalysators entsprechenden Schwellwert verglichen und bei Überschreiten des Schwellwertes in der betreffenden Lastphase eine Regenerationsphase durchgeführt wird.

2. Verfahren nach Anspruch 1, **dadurch gekennzeichnet, daß** bei Erreichen einer vorbestimmten Maximalbeladung des NOx-Speicherkatalysators unabhängig vom Betrieb der Brennkraftmaschine eine zusätzliche Regenerationsphase durchgeführt wird.

3. Verfahren nach Anspruch 1 oder 2, **dadurch gekennzeichnet, daß** die bestimmten Lastphasen durch eine einen Mindestwert überschreitende Momentenanforderung definiert sind.

4. Verfahren nach einem der vorhergehenden Ansprüche, **dadurch gekennzeichnet, daß** die bestimmten Lastphasen durch eine einen vorbestimmten Mindestwert überschreitende Beschleunigungsanforderung definiert sind.

5. Verfahren nach einem der vorhergehenden Ansprüche, **dadurch gekennzeichnet, daß** der der gewissen Mindestbeladung des NOx-Speicherkatalysators entsprechende Schwellenwert abhängig von der Alterung des NOx-Speicherkatalysators gewählt wird.

6. Verfahren nach einem der vorhergehenden Ansprüche, **dadurch gekennzeichnet, daß** die Dauer der Regenerationsphase kürzer als die Dauer der zugehörigen Lastphase ist.

## Claims

1. Method for regenerating an NOx storage catalytic converters which is arranged in the exhaust section of an internal-combustion engine which operates with excess air, in which NOx which has been stored in the NOx storage catalytic converter, when a predetermined loading of the NOx storage catalytic converter is reached, is catalytically converted in a regeneration phase by a reducing agent in the exhaust gas, the reducing agent being produced by briefly operating the internal-combustion engine with a rich fuel/air mix (lambda < 1), **characterized in that** certain load phases of the internal-combustion engine, the degree of loading of the NOx storage catalytic converter is compared with a threshold value which corresponds to a certain minimum loading of the NOx storage catalytic converter, and a regeneration phase is carried out if the threshold value is exceeded in the corresponding load phase.

2. Method according to Claim 1, **characterized in that** when a predetermined maximum loading of the NOx storage catalytic converter is reached, an additional regeneration phase is carried out irrespective of the operating mode of the internal-combustion engine.

3. Method according to Claim 1 or 2, **characterized in that** the particular load phases are defined by a torque demand which exceeds a minimum value.

4. Method according to one of the preceding claims, **characterized in that** the particular load phases are defined by an acceleration demand which exceeds a predetermined minimum value.

5. Method according to one of the preceding claims, **characterized in that** the threshold value which corresponds to the certain minimum loading of the NOx storage catalytic converter is selected as a function of the ageing of the NOx storage catalytic converter.

6. Method according to one of the preceding claims, **characterized in that** the duration of the regeneration phase is shorter than the duration of the associated load phase.

## Revendications

1. Procédé de régénération d'un catalyseur à accumulation de NOx, qui est disposé dans le trajet des gaz d'échappement d'un moteur à combustion interne fonctionnant avec un excès d'air, au cours duquel, dans le catalyseur à accumulation de NOx, le NOx accumulé, lorsqu'un remplissage prédéterminé du catalyseur à accumulation de NOx est atteint, est transformé au cours d'une phase de régénération par un agent réducteur dans les gaz d'échappement, l'agent réducteur étant produit par un fonctionnement bref du moteur à combustion interne avec un mélange riche carburant/air (lambda < 1), **caractérisé en ce que** au cours phases prédéterminées de charge du moteur à combustion interne, le degré de remplissage du catalyseur à accumulation de NOx est comparé à une valeur seuil correspondant à une certaine charge minimum du catalyseur à accumulation de NOx et **en ce que**, lorsque la valeur seuil est dépassée vers le haut dans la phase de charge en question, une phase de régénération est exécutée.

2. Procédé selon la revendication 1, **caractérisé en ce que**, lorsqu'un remplissage maximum prédéterminé du catalyseur à accumulation de NOx est atteint, une phase de régénération supplémentaire est effectuée indépendamment du fonctionnement du moteur à combustion interne.

3. Procédé selon la revendication 1 ou 2, **caractérisé en ce que** les phases de charge déterminées sont définies par une exigence de couple dépassant vers le haut une valeur minimum.

4. Procédé selon l'une des revendications précédentes, **caractérisé en ce que** les phases de charge déterminées sont définies par une demande d'accélération dépassant vers le haut une valeur minimum prédéterminée.

5. Procédé selon l'une des revendications précédentes, **caractérisé en ce que** la valeur de seuil correspondant à un certain remplissage minimum du catalyseur à accumulation de NOx est choisie en fonction du vieillissement du catalyseur à accumulation de NOx.

6. Procédé selon l'une des revendications précédentes, **caractérisé en ce que** la durée de la phase de régénération est inférieure à la durée de la phase de charge correspondante.
